# EUROPÄISCHE PATENTANMELDUNG

(11) **EP 0 747 685 A2**
(43) Veröffentlichungstag der Anmeldung: **11.12.1996**
(21) Anmeldenummer: 96114452.4
(22) Anmeldetag: 10.03.1993
(51) Int. Cl.: G01L 5/00

(54) **Vorrichtung zur Steck- und Ziehkraftmessung an Steckkontakten**

(30) Priorität: 13.03.1992 DE 4208138
(62) Teilanmeldung aus: 93103873.1
(71) Anmelder: S + S ELECTRONIC GmbH & Co. KG, 94513 Schönberg (DE)
(72) Erfinder: Frisch, Helmut, 94513 Schönberg (DE)
(74) Vertreter: Pfenning, Meinig & Partner

(57) **Zusammenfassung**

Die Erfindung betrifft eine Vorrichtung zur Steck- und Ziehkraftmessung an Steckkontakten, die am Band mit Stanzwerkzeugen gefertigt werden. Mit dem ein besonders geeigneter Sensor direkt an der Stanzmaschine für die Herstellung der Steckkontakte diese Messungen in großer Anzahl durchführen kann und Störeinflüsse weitestgehend vermieden werden. Dies ist dadurch möglich, daß die Meßkraft nicht direkt über den Meßdorn auf einen Sensor übertragen wird, sondern der Meßdorn mit dem Sensor mittels eines in radialer Richtung flexiblen Elementes, das in axialer Richtung fest mit beiden verbunden ist und so ausschließlich die Steck- und/oder Ziehkraft gemessen und gleichzeitig der störende Einfluß von Quer- und Torsionskräften unterdrückt wird.

## Beschreibung

Die Erfindung betrifft eine Vorrichtung zur Steck- und Ziehkraftmessung an Steckkontakten, die am Band mit Stanzwerkzeugen gefertigt werden. Sie ist besonders für den Einsatz direkt in der Produktion bei der Herstellung der Steckkontakte in einer Stanzerei mit parallel laufender Qualitätskontrolle geeignet sowie auch bei der Weiterverarbeitung der Kontakte in Montageautomaten od. dgl.

Bisher erfolgt die Qualitätskontrolle nach der Herstellung von Steckkontakten der verschiedensten Ausführungsformen getrennt von der Produktion unter Laborbedingungen, so daß herkömmliche Einrichtungen zur Kraftmessung Verwendung finden können. Unter diesen Bedingungen treten die im rauhen Stanzbetrieb vorhandenen Störgrößen wie die verschiedensten Schwingungen mit den unterschiedlichsten Frequenzen und Amplituden nicht auf, so daß die Meßergebnisse nicht negativ beeinflußt werden. In diesem Fall ist es ohne zusätzlichen Aufwand möglich, die Steck- bzw. Ziehkraft ohne Störkomponenten zu messen.

Mit den herkömmlichen Verfahren und Vorrichtungen ist es jedoch nicht möglich, den bereits genannten negativen Einfluß unter Produktionsbedingungen auszuschließen und nur die reinen unverfälschten Steck- und Ziehkräfte zu messen.

Bei steigenden Qualitätsforderungen ist der Aufwand zur externen nachträglichen Qualitätskontrolle der gefertigten Steckkontakte unvertretbar hoch, da mit steigender Anzahl der Transportaufwand zur Meßstation ansteigt und außerdem die Meßgeschwindigkeit so weit erhöht werden muß, daß auch eine negative Beeinflussung der Meßergebnisse durch die dadurch hervorgerufenen Schwingungen auftritt.

Es ist daher Aufgabe der Erfindung, ein Verfahren und eine Vorrichtung zur Messung der Steck- und Ziehkraft an Steckkontakten unter Produktionsbedingungen, wobei der Einfluß von Störgrößen verhindert wird, zu schaffen.

Erfindungsgemäß wird diese Aufgabe durch die im kennzeichnenden Teil des Anspruchs 1 genannten Merkmale gelöst. Vorteilhafte Weiterbildungen und Ausführungsformen ergeben sich aus den Merkmalen der Unteransprüche.

Mit der erfindungsgemäßen Vorrichtung ist es möglich, direkt an der Stanzmaschine für die Herstellung der Steckkontakte diese Messungen in großer Anzahl durchzuführen und bei auftretenden Qualitätsmängeln die gewonnenen Signale dazu zu nutzen, um eine an die Maschine gekoppelte oder externe Abtrenneinrichtung anzusteuern. Somit ist gesichert, daß keine fehlerhaft gefertigten Steckkontakte die Produktion verlassen.

Durch geeignete Programmierung eines Rechners können die laufenden Meßergebnisse dazu genutzt werden, eine Qualitätstendenz zu ermitteln und außerdem Beschädigungen an den Stanzmaschinen, Werkzeugen, den Meßdornen oder dem Antrieb für die Meßvorrichtung zu verhindern. Dies kann dadurch geschehen, daß verschlissene Werkzeuge rechtzeitig ausgetauscht werden oder in besonderen Notfällen ein Maschinenstoff automatisch eingeleitet wird.

Dadurch, daß Meßwerte nur in einem bestimmten definierten Meßhubbereich erfaßt und verarbeitet werden, können geringere Ansprüche an die Speicherkapazität und Rechengeschwindigkeit der zu verwendenden Mikrorechner gestellt werden.

Das Meßverfahren kann in einfacher Ausführung auf die Ermittlung von Spitzenmeßwerten begrenzt werden, so daß in diesem Fall auf eine synchrone Wegmessung des Meßdornhubes verzichtet werden kann.

In einer komfortablen Variante ist es jedoch ebenfalls möglich, einen Wegsensor an der erfindungsgemäßen Vorrichtung vorzusehen, mit dem es dann möglich ist, Kraft-Wegverläufe zu erfassen. Mit diesen gemessenen Kraft-Wegverläufen können beim Vergleich mit vorgegebenen, in einem Speicher abgelegten werkzeugabhängigen soll-Kurvenverläufen auch Schlüsse auf die eventuell aufgetretene Fehlerart erkannt werden. So ist es z.B. möglich, die Meßhubbewegung sofort zu stoppen, wenn die Meßkraft bereits zu Beginn des Auftreffens des Meßdorns auf den Steckkontakt einen Maximalwert überschreitet, so daß eine Beschädigung des Meßdorns und der gesamten Meßvorrichtung verhindert werden kann.

Die Meßvorrichtung kann mit einem eigenen Antriebssystem ausgestattet oder direkt mit Stanzwerkzeugen gekoppelt sein. Dies ist dadurch möglich, daß die Meßkraft nicht direkt über den Meßdorn auf einen Sensor übertragen wird, sondern der Meßdorn mit dem Sensor mittels eines in radialer Richtung flexiblen Elementes, das in axialer Richtung fest mit beiden verbunden ist. Dadurch kann ausschließlich die Steck- und/oder Ziehkraft gemessen und gleichzeitig der störende Einfluß von Quer- und Torsionskräften unterdrückt werden. Weiterhin werden Fluchtungsfehler ohne zusätzlichen Aufwand ausgeglichen.

Das Element kann in günstiger Weise ein Federstab oder ein Gelenk sein, das direkt am Sensor der in Form eines geschlitzten Biegebalkens ausgebildet ist und am Meßdorn in Richtung der zu messenden Kräfte befestigt ist oder als Teil eines zwischengeschalteten Adapters ausgebildet ist.

Dieser Adapter überträgt durch seine dreiteilige Ausführung mit den zwei Kupplungselementen, die über einen Federstab verbunden sind und in einem Abstand voneinander gehalten sind, ausschließlich die Kräfte, die in Steck- bzw. Ziehrichtung wirken. Der Federstab gleicht Torsionskräfte aus, die durch eventuelle Verkantung des Meßdornes gegenüber dem Steckkontakt hervorgerufen werden können. Seitliche Verkantungen, die den Querkrafteinfluß hervorrufen würden, werden dadurch ausgeglichen, daß sich der Federstab, der die beiden Kupplungselemente des Adapters in einem Abstand hält, verbiegen kann und der Kraftfluß in Richtung der neutralen Faser des Federstabes erfolgt.

Die beiden äußeren Kupplungselemente des Adapters sollen dabei so ausgeführt sein, daß ein leichter Austausch gegeben ist, Hierzu kommen bevorzugt Schraubverbindungen in Frage, die jedoch sicherstellen müssen, daß ein seitliches Verkanten ausgeschlossen ist und Spielfreiheit, sowohl in axialer als auch in radialer Richtung, gegeben ist.

Unter den bereits genannten rauhen Produktionsbedingungen ist die Verwendung von Dehnmeßstreifen zur Kraftmessung besonders geeignet, da sie wesentlich unempfindlicher gegenüber Schwingungseinflüssen sind. Dabei liegen die zu messenden Kräfte im Bereich von einem Newton bis zu einigen hundert Newton. Da die Messung mit einigen hindert Hüben pro Minute erfolgt, ist die Verwendung eines üblicherweise quer zur Meßrichtung angebrachten Biegebalkens nicht zu empfehlen, weil er schwingt, so daß die Meßergebnisse in unzulässiger Weise verfälscht werden. Der erfindungsgemäße Kraftmeßsensor unter Verwendung von Dehnmeßstreifen besteht somit aus Außenteilen, die mit einem rechteckigen Steg verbunden sind. Dabei sind an den Außenseiten der Außenteile Elemente vorgesehen, die auf der einen Seite zum Abschluß des Adapters und auf der anderen Seite zur Befestigung des Sensors an einem Meßschlitten dienen. Um eine möglichst große Meßempfindlichkeit im Meßbereich zu sichern, ist der Steg mindestens zweifach geschlitzt, wobei die Schlitze quer zur Längsrichtung des Steges verlaufen und die Schlitzöffnungen an jeweils entgegengesetzten Schmalseiten des Steges im gleichen Abstand von den Außenteilen liegen. Auf der entgegengesetzten Schmalseite des Steges gegenüber der jeweiligen Schlitzöffnung ist jeweils ein Dehnmeßstreifen befestigt, dessen Meßdrähte in Längsrichtung des Steges verlaufen. Die beiden anderen Dehnmeßstreifen einer üblicherweise verwendeten Brückenschaltung können auf einer oder auf beiden Breitseiten des Steges befestigt sein, so daß sie außerhalb der geschlitzten Bereiche liegen und ihre Meßdrähte orthogonal zur Längsrichtung des Steges verlaufen. Durch die eingebrachten Schlitze verformt sich der Steg bei Einwirkung von Kräften in Längsrichtung des Sensors besonders in den Bereichen, in denen die Dehnmeßstreifen auf den Schmalseiten des Steges befestigt sind, so daß eine hohe Meßempfindlichkeit vorhanden ist. Werden zusätzliche Schlitze an den äußeren Enden des Steges eingebracht, die gespiegelt symmetrisch ausgeführt sind, wird das Übertragungsverhalten noch vergrößert, da die Krafteinleitung außermittig auf der entgegengesetzt zu der Seite erfolgt auf der die Öffnungen der inneren Schlitze sind und somit die Kraft über einen größeren Hebel eingeleitet wird, was eine größere Verformung im Bereich der Dehnmeßstreifen auf den Schmalseiten des Steges hervorruft.

Die Meßempfindlichkeit kann durch Variation des Steg-Breiten/Höhenverhältnisses, der Schlitzlänge, der Schlitzbreite und durch unterschiedliche Bohrungsdurchmesser von Bohrungen, die an den Enden der beiden Schlitze, die nicht an der Außenseite des Steges liegen und in die diese Schlitze auslaufen, verändert werden. Diese Bohrungen bringen einen weiteren Vorteil, indem in diesem mechanisch besonders belasteten Bereich die Ausbildung von Brüchen verhindert wird.

Die beiden Dehnmeßstreifen auf der bzw. den Breitseiten des Steges dienen ausschließlich der Temperaturfehlerkompensation. Ebenfalls auf einer Breitseite des Steges ist ein Lötstützpunkt vorgesehen, mit dem alle vier Dehnmeßstreifen leitend verbunden sind und an dem außerdem vier Leiter eines Kabels verlötet sind. Dieses Kabel wird durch eine Öffnung in einem Gehäuse, das den Steg vollständig umschließt, geführt. An die Öffnung, durch die das Kabel geführt wird, ist ein nach außen weisender Stutzen aufgesetzt, auf den wiederum ein den Stutzen und das Kabel umschließender Schrumpfschlauch aufgeschoben wird. Damit wird erreicht, daß der Sensor gegenüber äußeren negativen Einflüssen wie Schmutz und Feuchtigkeit abgeschirmt ist.

In bevorzugter Weise sollte der Sensor so eingebaut werden, daß die Breitseite des Steges orthogonal zu den Hauptschwingungsrichtungen der Stanzmaschine oder der Montageautomaten liegt, da dadurch der Einfluß von Verkantungsfehlern beim Aufsetzen des Meßdornes reduziert wird.

Nachfolgend soll die Erfindung anhand von Ausführungsbeispielen näher beschrieben werden. Es zeigen:
- Fig. 1: ein Blockschaltbild der Meßwertverarbeitung;
- Fig. 2: ein Diagramm eines Kraft-Wegverlaufes;
- Fig. 3: eine Schnittdarstellung der Meßvorrichtung;
- Fig. 4: einen Schnitt durch einen Adapter;
- Fig. 5: einen Längsschnitt durch einen Hubantrieb;
- Fig. 6: eine Seitenansicht dieses Hubantriebes, und
- Fig. 7A,7B,7C,7D: Ansichten eines Steck- und Ziehkraftmeßsensors,
- Fig. 8: eine Ausführungsform eines Meßdorns im Schnitt.

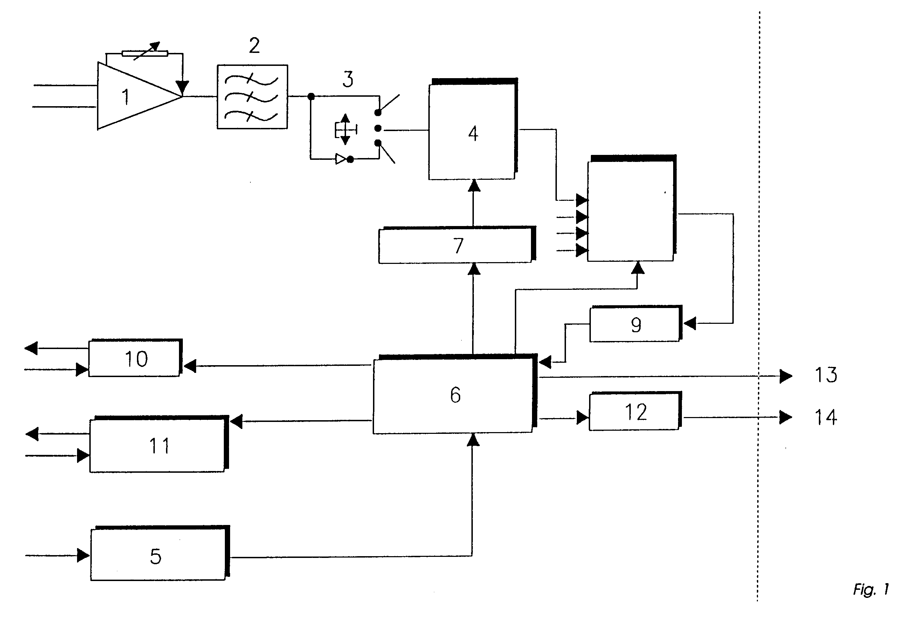

Aus dem Blockschaltbild nach Fig. 1 geht die Meßsignalverarbeitung und die Bereitstellung von Steuer- und Auswertesignalen hervor. Das von Dehnmeßstreifen oder einem Piezo-Sensor, dann gemessene Signal, wenn sich das Stanzwerkzeug im Bereich des unteren Totpunktes befindet und dadurch gleichzeitig die Haltefunktion der Steckkontakte 15 realisiert wird, wird in einem Verstärker 1 auf ein verarbeitbares Maß gebracht, anschließend einem Filter 2 zugeführt, in dem eventuell noch vorhandene Störgrößen beseitigt werden, und anschließend einem Inventer 3 zugeführt, in dem eventuell gemessene negative Werte in positive Meßsignale invertiert werden. Dieses Signal gelangt dann in einem Spitzenwertspeicher 4, in dem für jeweils einen Meßhub der Kraftspitzenwert gehalten wird. Der Meßhubbereich ist werkzeugabhängig und muß demzufolge einstellbar sein. Dies erfolgt zweckmäßigerweise über eine Tastatureingabe, bei der der Meßhubbereich manuell eingegeben werden kann oder bei Eingabe einer entsprechenden Werkzeugidentitätsnummer aus einem Speicher der entsprechende Meßhubbereich abgerufen und dem Spitzenwertspeicher zugeführt wird. Der Spitzenwertspeicher wird im vorgegebenen Meßhubbereich aktiviert, indem der Signalfluß von einem Sensor 5, der ein proportionales Signal des Meßhubweges abgibt, über einen Mikrorechner 6 und einen Meßhubbereichseinsteller 7 dem Spitzenwertspeicher 4 zu dessen Aktivierung zugeführt wird. Überschreitet der gemessene Spitzenwert einen werkzeugspezifischen maximal zulässigen Kraftwert, wird ein Fehlersignal über einen Multiplexer 8 einem Schieberegister 9 des Mikrorechners 6 zugeführt. Das Schieberegister 9 hat dabei die Aufgabe, daß nicht bei jeder Feststellung eines Fehlers eine Abtrenneinrichtung 10 aktiviert wird, sondern dies erst nach Erreichen einer fest vorgegebenen Anzahl von Fehlersignalen, die im Schieberegister 9 gespeichert sein müssen, erfolgt. Der Mikrorechner 6 dient neben der Ansteuerung der Abtrenneinrichtung 10 der Einstellung des Meßhubbereiches auch der Ansteuerung der mechanischen Meßeinheit 11 und leitet außerdem Fehlerwerte über eine Fehlerausgabeeinheit 12 und Meßwerte über eine zusätzliche Ausgabe einem in diesem Blockschaltbild nicht dargestellten Leitrechner über zwei Ausgänge 13 und 14 zu. Im Leitrechner können die Meßwerte auf verschiedenste Weise ausgewertet werden, so daß z.B. Qualitätstendenzen ermittelt werden können. Außerdem kann eine Fehlerauswertung durchgeführt werden, die zur Steuerung des Stanzenantriebes verwendet werden kann.

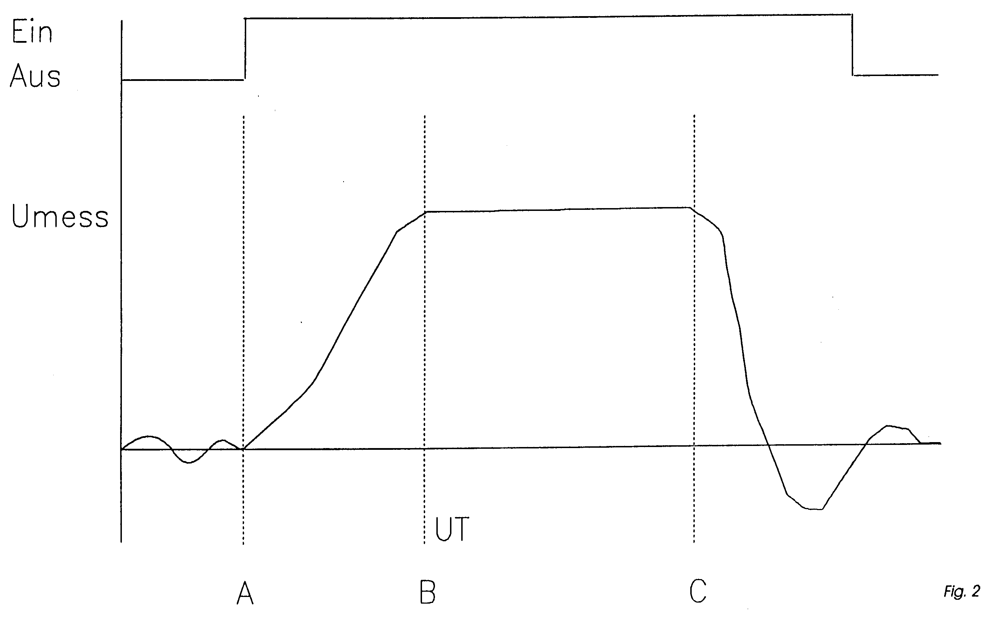

Aus dem in Fig. 2 dargestellten Diagramm geht ein typischer Kraft-Wegverlauf einer Steck- und Ziehkraftmessung an einem Steckkontakt hervor. Dabei markiert die erste gestrichelte Linie A das Auftreffen des Meßdorns auf dem Steckkontakt, der Bereich von der gestrichelten Linie A zur gestrichelten Linie B das Eintauchen des Meßdorns, der Bereich von der gestrichelten Linie B bis zur gestrichelten Linie C die Gleitphase und im Anschluß an die gestrichelte Linie C das Ausziehen des Meßdornes aus dem Steckkontakt. Die obere Linie kennzeichnet im eingeschalteten Bereich den Meßhubbereich, in dem die Speichereinheit aktiviert ist. Dies ist z.B. bei einem Kurbelantrieb mit einem Winkelsensor ein bestimmter Winkelbereich, in dem die Meßwerte erfaßt werden. Außerhalb dieses Bereiches ist die Speichereinheit nicht aktiv.

Wird nicht nur eine Spitzenwertmessung, sondern auch eine Kraft-Wegmessung durchgeführt, wird dieser gemessene Kurvenverlauf mit einer im Speicher abgelegten Sollkurve verglichen. Wird eine Kraft gemessen, die außerhalb eines vorgegebenen Toleranzbereiches um die Sollkurve liegt, wird ein Fehlersignal ausgelöst. Der gleiche Sachverhalt ergibt sich auch bei der Spitzenwertmessung, indem hier ein Vergleich des Meßwertes mit einem vorgegebenen Grenzwert durchgeführt wird. Bei Unterschreitung dieses Grenzwertes erfolgt ebenfalls eine Fehlermeldung.

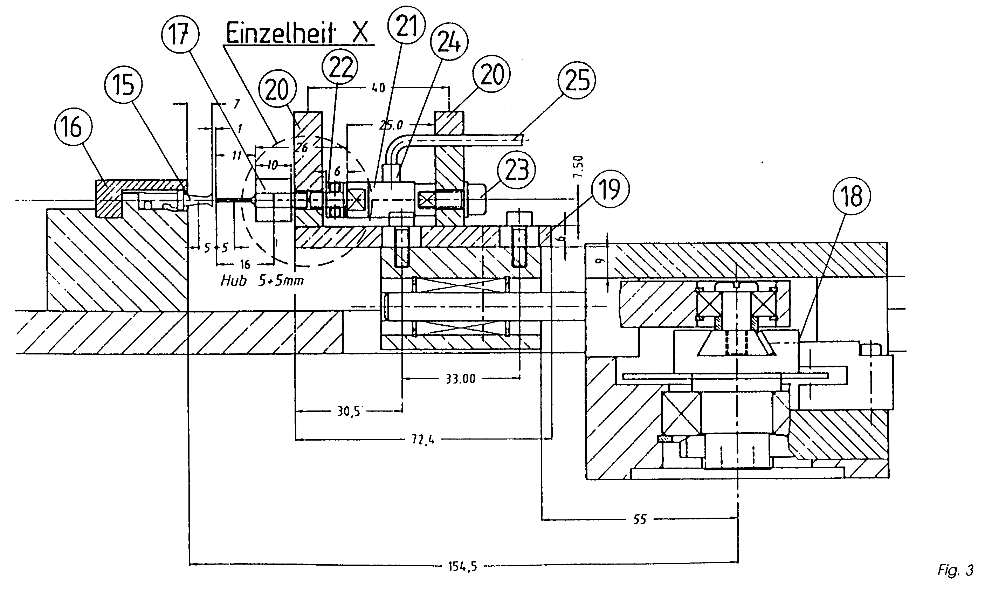

In der Fig. 3 ist eine vollständige mechanische Meßeinheit in einer Schnittdarstellung gezeigt. Hierbei ist ein Steckkontakt 15 am Werkzeugauslauf eines Stanzwerkzeuges dargestellt, der in Form eines Steckkontaktstreifens von einer Halteeinrichtung 16, beim Meßvorgang gehalten wird. Zur Messung der Steck- und Ziehkraft wird der auf einem Meßschlitten 19 befestigte Meßdorn 17 mittels eines Hubantriebes 18 in Richtung des Steckkontaktes 15 bewegt. Der Hubantrieb 18 ist vorzugsweise ein Kurbelantrieb mit Schrittmotor. Auf dem Meßschlitten 19 ist ein Sensorhalter 20 angebracht, auf dem wiederum der Sensor 21 mit dem an ihn gekoppelten Adapter 22 mittels einer Schraube 23 befestigt ist. Am Gehäuse des Sensors 21 ist ein Stutzen 24 angebracht, durch den ein Kabel 25 in das Innere des Sensors 21 geführt ist, über dessen Einzelleitungen die Meßsignale einem Verstärker zugeführt werden. Zum Schutz vor Feuchtigkeit, Staub und Schmutz ist über Kabel 25 und Stutzen 24 ein Schrumpfschlauch gezogen.

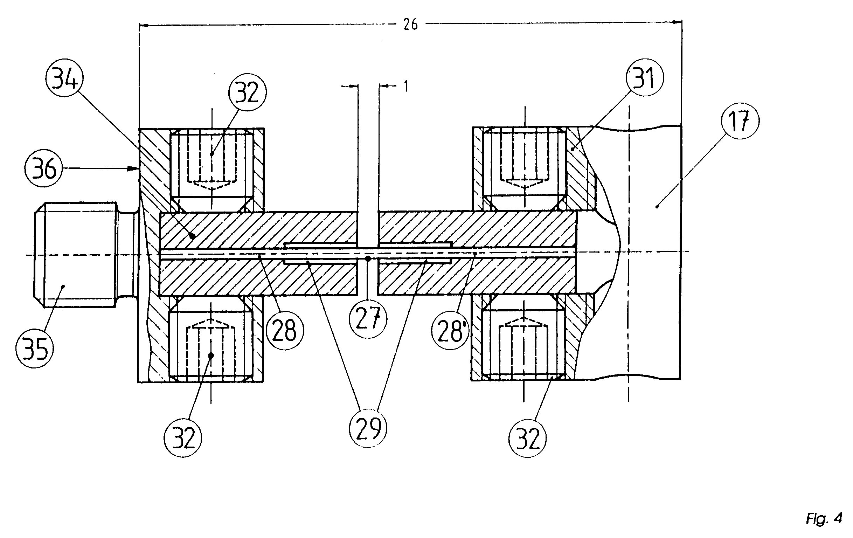

Das in der Fig. 3 eingezeichnete Einzelteil X ist in der Fig. 4 in vergrößerter und geschnittener Form abgebildet. Es handelt sich hierbei um den zwischen Meßdorn 17 und Sensor 21 fluchtend mechanisch verbundenen Adapter 22. Der Adapter 22 verfügt über zwei Kupplungselemente 31, 34, durch die ein Federstab 27 geführt ist. Der Federstab 27 ist dabei in Bohrungen 28 der beiden Kupplungselemente 31, 34 verklemmt und überträgt die Steck- und Ziehkraft vom Meßdorn 17 zum Sensor 21 axialspielfrei. Der Federstab 27 hält dabei die beiden Kupplungselemente 31, 34 in einem Abstand, der vorzugsweise größer als die lichte Weite des Querschnittes des Federstabes 27 ist. An den gegenüberliegenden Seiten der Kupplungselemente 31, 34 sind in den Bohrungen 28 zusätzliche Sacklochbohrungen 29 mit größerem Durchmesser vorhanden, in denen der Federstab 27 mit einem gewissen Spiel geführt ist. Dieses Spiel dient dazu, daß im Falle einer schrägen Krafteinleitung über den Meßdorn 17 der Biegeradius des Federstabes 27 in diesem Bereich vergrößert wird, dadurch ein radiales Ausweichen des Federstabes 27 möglich ist, und daß bei Verdrehung des Meßdorns 17 die drehbare Federstablänge vergrößert ist und dadurch die Belastung gering gehalten wird. Das äußere Ende des Kupplungselementes 31 ist auf der einen Seite als Klemmstück mit integriertem Meßdorn 17 mit Klemmschrauben 32 ausgebildet. An dem anderen Kupplungselement 34 des Adapters 22 ist ebenfalls ein Klemmelement mit Klemmschrauben 32 befestigt, wobei an diesem Klemmstück ein Befestigungselement 35 mit einer planen Fläche 36, die orthogonal zur Längsachse des Adapters 22 liegt, integriert ist. Das Befestigungselement 35 ist vorzugsweise als Schraube ausgebildet, deren Außengewinde in ein entsprechendes Innengewinde des Sensors 21 einschraubbar ist.

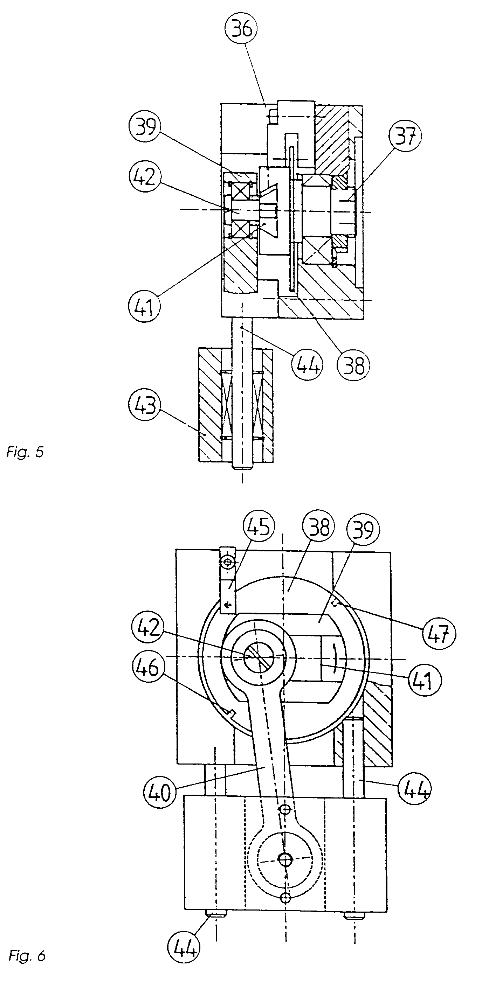

In der Fig. 5 ist in einer Schnittdarstellung der Kurbelantrieb des Meßschlittens 19 dargestellt. Hierbei ist in einem Gehäuse 36 eine Antriebswelle 37 drehbar gelagert. Auf der Welle 37 ist eine Scheibe 38 mit Markierungen zur inkrementalen Abtastung des Winkels vorhanden. Die Antriebswelle 37 ist außerdem mit einer Hubscheibe 39 gekoppelt, an der die in dieser Darstellung nicht sichtbare Pleuelstange 40 in einer Trapeznut 41 mit einer Klemmschraube 42 je nach gewünschtem Hubweg klemmbar ist. Die Meßschlittenauflage 43 wird über die Pleuelstange 40 in Meßrichtung bewegt und ist in einer doppelten Führung 44 gegen Verkanten gesichert.

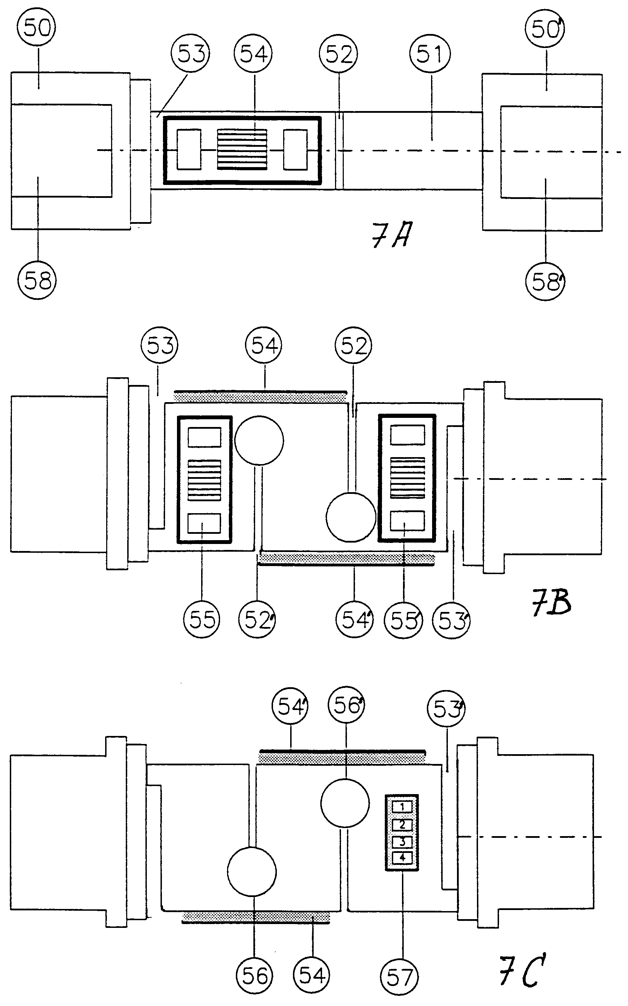

In der Seitenansicht des Hubantriebes 18 (Fig. 6) ist eine andere Ausführungsform der Sensorscheibe 38 gegenüber der in der Fig. 5 beschriebenen erkennbar. Diese Sensorscheibe 38 verfügt an ihrem Rand über Aussparungen 46, 47, die zur Erkennung der Totpunkte des Kurbeltriebes verwendet werden. Die Signalabfrage erfolgt hierzu mit einem optischen Sensor 45, der am Gehäuse 36 befestigt ist und die Signale beim Passieren der Aussparungen 46 und 47 liefert. Selbstverständlich können weitere Aussparungen vorgesehen werden, die bei der Steuerung des Hubmeßbereiches Verwendung finden.

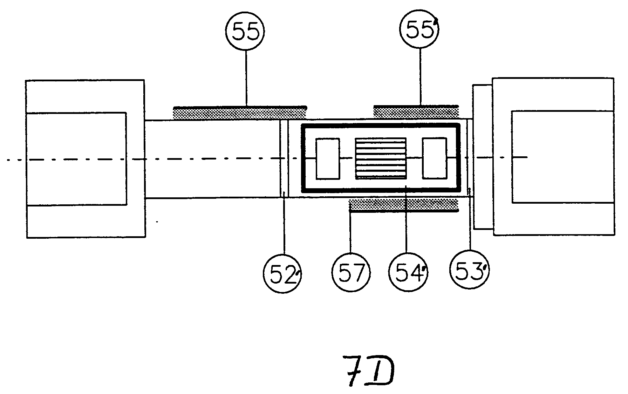

Aus den Darstellungen der Figuren 7A, 7B, 7C, 7D ist der Aufbau eines Sensors 21 erkennbar. Die mit nicht dargestelltem Innengewinde versehenen Außenteile 50, 50' sind über einen Steg 51, mit rechteckigem Querschnitt, verbunden. In dem Steg 51 sind zwei Schlitze 52, 52' gespiegelt symmetrisch in gleichem Abstand von den Außenseiten des Steges 51 in beide Schmalseiten des Steges 51 eingebracht. Auf den Schmalseiten des Steges 51 sind jeweils ein Dehnmeßstreifen 54, 54' so befestigt, daß die Öffnungen der Schlitze 52, 52' freigelegt bleiben und die Dehnmeßstreifen 54, 54' im wesentlichen in dem Bereich des Steges 51 aufgeklebt sind, der gegenüber den Öffnungen der jeweiligen Schlitze 52, 52' liegt.

Außerdem sind zusätzliche Schlitze 53, 53' ebenfalls symmetrisch gespiegelt an den Außenseiten des Steges 51 eingebracht. Dabei weisen die Öffnungen dieser Schlitze 53, 53' jeweils zur entgegengesetzten Schmalseite des Steges 51, an denen die Öffnungen der benachbarten Schlitze 52 oder 52' liegen. Die Länge der Schlitze 52, 52' und 53, 53' sollte über die Mittelachse des Sensors hinausragen.

Die weiteren zwei bei einer üblichen Brückenschaltung erforderlichen Dehnmeßstreifen 55, 55' werden an den Breitseiten bzw. einer Breitseite des Steges 51 ebenfalls so geklebt, daß keine Überdeckung eines Schlitzes erfolgt. Die Meßdrähte der auf den Schmalseiten des Steges 51 befindlichen Dehnmeßstreifen 54, 54' und die auf wenigstens einer Breitseite des Steges 51 befestigten Dehnmeßstreifen 55, 55' sind so geklebt, daß sie orthogonal zur Steglängsrichtung ausgerichtet sind. Die Dehnmeßstreifen 54, 54' dienen ausschließlich der Steck- und Ziehkraftmessung und die Dehnmeßstreifen 55, 55' bewirken in erster Linie eine Temperaturfehlerkompensation.

Die Enden der Schlitze 52, 52' laufen in Bohrungen 56, 56' aus. Mit diesen Bohrungen 56, 56' ist eine leichtere Biegsamkeit des Steges 51 gegeben und somit eine größere meßbare Verformung im Bereich der Dehnmeßstreifen 54, 54' vorhanden. Außerdem verhindern die Bohrungen 56, 56' bei schwingender Belastung ein Brechen des Steges 51 im Bereich der Enden der Schlitze 52, 52'. Die Bohrungen 56, 56' haben dabei einen wesentlich größeren Durchmesser als die Breite der Schlitze 52, 52'. Die Meßempfindlichkeit des Sensors 21 kann durch Wahl der Länge und Breite der Schlitze 52, 52'; 53, 53' sowie der Variation der Bohrungsdurchmesser der Bohrungen 56, 56' oder durch eine entsprechende Änderung des Steg-Höhen/Breitenverhältnisses erfolgen.

Die Dehnmeßstreifen 54, 54' und 55, 55' sind mit jeweils einem Leiter eines auf einer Breitseite des Steges 51 aufgeklebten Lötstützpunktes 57 verbunden, und diese Leiter sind wiederum auf dem Lotstützpunkt 57 mit jeweils einem Leiter, durch die die Meßsignale über ein Kabel 25 einem Verstärker und der entsprechenden Meßwertverarbeitung zugeführt werden, verlötet.

Die Außenteile 50, 50' des Sensors 21 verfügen über an ihren Außenseiten angebrachten Flächen 58, 58', die einer normierten Schlüsselweite eines Gabelschlüssels entsprechen, und dienen zur verspannungsfreien Befestigung des Sensors 21 auf dem Meßschlitten 19 und am Adapter 22.

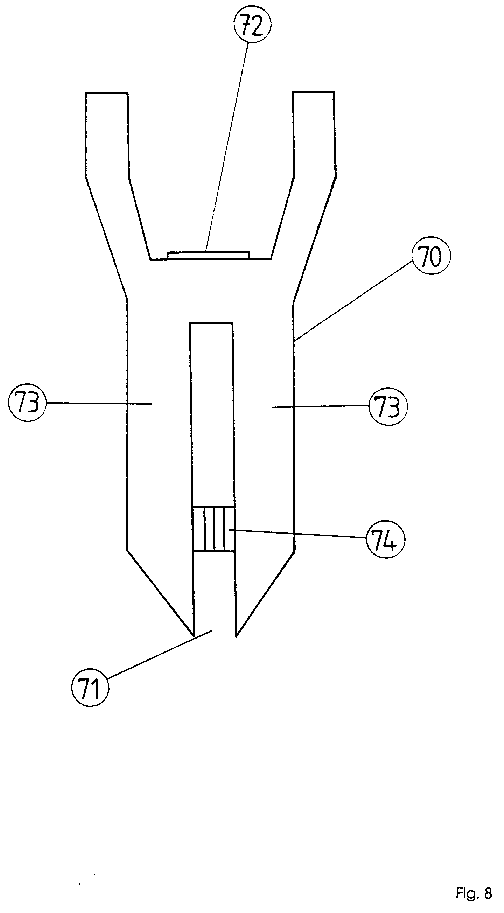

Aus Figur 8 geht die spezielle Ausführungsform eines Meßdornes, der besonders für die Messung der Steck- und/oder Ziehkraft von Tulpenkontakten anwendbar ist, hervor.

Der Meßdorn 70 verfügt über zwei parallele Meßschäfte 73, die durch einen Schlitz 71 getrennt sind, so daß die zumindest oberflächengehärteten Meßschäfte 73 beim Einführen in den Steckkontakt eine Bewegung aufeinander zu und beim Ausführen eine Bewegung voneinander weg ausführen können. Diese Relativbewegung der beiden Meßschäfte 73 dient als indirekter Meßwert für die Steckkraft und kann mittels eines an den beiden Meßschäften 73 im Schlitz 71 befestigten Piezo-Sensor 74 oder mit einem oberhalb des Schlitzes 71 orthogonal zu diesem am Meßdorn 70 befestigten Dehnmeßstreifen 72, der die Verformung in diesem Bereich des Meßdornes 70, die durch die Relativbewegung der Meßschäfte 73 hervorgerufen wird, ausnutzt, gemessen werden.

## Patentansprüche

1. Vorrichtung zur Messung der Steck-und/oder Ziehkräfte an mit Stanzwerkzeugen gefertigten Steckkontakten,
dadurch **gekennzeichnet,**
daß ein an einem Stanzwerkzeug angeordneter Sensor (21) zur Kräftemessung in radialer Richtung flexibel ausgebildet und in axialer Richtung mit einem in den Steckkontakt einführbaren Meßdorn (17) fest verbunden ist.

2. Vorrichtung nach Anspruch 1, dadurch gekennzeichnet, daß ein radial flexibles Element in Form eines Federstabes (27) vorgesehen ist, der zwischen Sensor (21) und Meßdorn (17), diese im Abstand haltend, in Wirkrichtung der Steck- und Ziehkraft an beiden befestigt ist.

3. Vorrichtung nach Anspruch 1 oder 2,
dadurch gekennzeichnet, daß der Federstab (27) in einem Adapter (22) in zwei sich gegenüberliegenden, zur Verbindung von Sensor (21) und Meßdorn (17) ausgebildeten Kupplungselementen (31, 34) befestigt ist.

4. Vorrichtung nach einem der Ansprüche 1 bis 3,
dadurch gekennzeichnet, daß der Federstab (27) in den Kupplungselementen (31, 34) in Bohrungen (28, 28') axial spielfrei gefaßt ist.

5. Vorrichtung nach Anspruch 3 und 4,
dadurch gekennzeichnet, daß die Bohrungen (28, 28') an den sich gegenüberliegenden Seiten der Kupplungselemente (31) und (34) in, ein radiales Ausweichen des Federstabes (27) ermöglichenden Sacklochbohrungen (29) auslaufen.

6. Vorrichtung nach einem der Ansprüche 1 bis 5,
dadurch gekennzeichnet, daß der Federstab (27) in den Bohrungen (28, 28') so gefaßt ist, daß die Kupplungselemente (31) und (34) in einem Abstand gehalten sind, der größer als die lichte Querschnittsweite des Federstabes (27) ist.

7. Vorrichtung nach einem der Ansprüche 1 bis 6,
dadurch gekennzeichnet, daß der Sensor (21) ein Piezo-Sensor ist.

8. Vorrichtung nach einem der Ansprüche 1 bis 6,
dadurch gekennzeichnet, daß der Sensor (21) ein geschlitzter Biegeblock ist, der mit vier Dehnmeßstreifen in Brückenschaltung bestückt ist.

9. Vorrichtung nach einem der Ansprüche 1 bis 8,
dadurch gekennzeichnet, daß der Meßdorn (70) zwei durch einen in Meßbewegungsrichtung des Meßdorns (70) ausgerichteten, von der Eintauchseite ausgehenden Schlitz (71) getrennte Meßschäfte (73) aufweist und die Relativbewegung der Meßschäfte (73) mit einem Sensor meßbar ist.

10. Vorrichtung nach Anspruch 9,
dadurch gekennzeichnet, daß der Sensor ein Piezo-Sensor (74) ist, der im Schlitz (71) an den Meßschäften (73) befestigt ist.

11. Vorrichtung nach Anspruch 9,
dadurch gekennzeichnet, daß der Sensor ein Dehnmeßstreifen (72) ist, der oberhalb des Schlitzes (71) orthogonal zur Meßbewegungsrichtung am Meßdorn (70) befestigt ist.

12. Vorrichtung nach Anspruch 8,
dadurch **gekennzeichnet,**
daß zwei Außenteile (50, 50') des Biegeblockes über einen Steg (51) mit rechteckigem Querschnitt verbunden sind und der Steg (51) in seiner Längsrichtung zwei in jeweils gleichem Abstand von den Außenteilen befindlichen orthogonal zur Längsrichtung verlaufende Schlitze (52, 52') aufweist, deren jeweilige Öffnungen sich an der entgegengesetzten Seite des Steges (51) befinden und auf den Schmalseiten des Steges jeweils ein Dehnmeßstreifen (54, 54') gegenüber einer Schlitzöffnung befestigt ist, der die an dieser Seite des Steges (51) befindliche Schlitzöffnung nicht überdeckt, und die Dehnungsmeßstreifen in Steglängsrichtung ausgerichtet sind.

13. Vorrichtung nach Anspruch 8 und 12,
dadurch gekennzeichnet, daß an den Außenseiten des Steges (51) zwei gespiegelt symmetrisch und orthogonal zur Steglängsrichtung verlaufende Schlitze (53, 53'), deren Öffnungen an jeweils entgegengesetzten Schmalseiten des Steges und jeweils entgegengesetzt zu den Öffnungen der benachbarten Schlitze (52, 52') liegen, eingebracht sind.

14. Vorrichtung nach Anspruch 8, 12 und 13,
dadurch gekennzeichnet, daß die Länge der Schlitze (52, 52'; 53, 53') über die Mittelachse des Steges hinausreicht.

15. Vorrichtung nach einem der Ansprüche 8 und 12 bis 14,
dadurch gekennzeichnet, daß die Schlitze (52, 52') in Bohrungen (56, 56') auslaufen, deren Durchmesser größer als die Breite der Schlitze (52, 52') ist.

16. Vorrichtung nach einem der Ansprüche 8 und 12 bis 15,
dadurch gekennzeichnet, daß zwei Dehnmeßstreifen (55, 55') auf den Breitseiten des Steges (51) befestigt sind, deren Meßrichtung orthogonal zur Steglängsrichtung ausgerichtet sind und die Schlitze (52, 52'; 53, 53') nicht überdecken.

17. Vorrichtung nach einem der Ansprüche 1 bis 16,
dadurch gekennzeichnet, daß der Steg (51) des Sensors (21) in Einbaulage so ausgerichtet ist, daß die Breitseitenflächen des Steges (51) senkrecht zu Vibrationen und Stöße bzw. Schläge erzeugenden Kräften der Maschine ausgerichtet sind.

18. Vorrichtung nach einem der Ansprüche von 1 bis 17,
dadurch gekennzeichnet, daß die auf einem Meßschlitten (19) befestigte, aus Meßdorn (17), Adapter (22) und Sensor (21) bestehende Vorrichtung mit einem gesonderten Hubantrieb (18) verbunden ist.

19. Vorrichtung nach Anspruch 18,
dadurch gekennzeichnet, daß der Antrieb (18) ein Kurbeltrieb mit Schrittmotor ist.

20. Vorrichtung nach Anspruch 18 und 19,
dadurch gekennzeichnet, daß am Antrieb (18) ein Wegsensor angeschlossen ist.

21. Vorrichtung nach den Ansprüchen von 1 bis 20,
dadurch gekennzeichnet, daß mit dem Antrieb (18) eine Haltevorrichtung (16), zum Halten der Steckkontakte (15) während des Meßvorganges, gekoppelt ist.
